# EUROPÄISCHE PATENTSCHRIFT

(11) **EP 1 502 926 B1**
(45) Veröffentlichungstag und Bekanntmachung des Hinweises auf die Patenterteilung: **15.04.2009**
(21) Anmeldenummer: 04016927.8
(22) Anmeldetag: 19.07.2004
(51) Int. Cl.: C08G 18/00, C08G 18/42, C09D 175/00, C09D 175/04, C09D 175/06

(54) **Neue Bindemittelkombinationen für hochbeständige Kunststofflacke**
New primer combinations for highly resistent polymer lacquers
Nouvelles combinations de charges premières pour des laques polymères à haute résistance

(30) Priorität: 30.07.2003 DE 10334723
(43) Veröffentlichungstag der Anmeldung: 02.02.2005
(73) Patentinhaber: Bayer MaterialScience AG, 51368 Leverkusen (DE)
(72) Erfinder: Wamprecht, Christian, Dr., 41472 Neuss (DE); Tillack, Jörg, Dr., 51427 Bergisch Gladbach (DE)

(56) Entgegenhaltungen:
- GB-A- 2 287 469
- US-A- 3 954 899
- US-A- 3 989 676
- US-A- 5 574 102

## Beschreibung

Die vorliegende Erfindung betrifft neue Bindemittelkombinationen aus Polyisocyanaten, speziellen Lacton-basierenden Polyolen und Polyesterpolyolen sowie deren Verwendung zur Herstellung von Überzügen, vorzugsweise auf Kunststoffen.

Lackformulierungen zur Herstellung von witterungs- und chemikalienbeständigen, hochflexiblen Überzügen auf Kunststoffen sind aufgrund der steigenden Verwendung von Kunststoffen für hochwertige Anwendungen, z. B. im Fahrzeugbau, von großem Interesse. Kernproblem dabei ist jedoch die Bereitstellung von Polyolen, die der ausgehärteten Beschichtung eine möglichst hohe Flexibilität bei gleichzeitig hoher Härte, ausgezeichneter Tieftemperatur-Flexibilität und sehr guten Beständigkeitseigenschaften, wie Witterungs-, Teer-, Lösemittel- und Chemikalienbeständigkeit, verleihen.

Lacke auf Basis von Polyesterpolyolen wie sie beispielsweise in EP-A 166 962, EP-A 318 800, EP-A 571 829 oder EP-A 650 992 beschrieben werden, zeichnen sich gegenüber Polyacrylatpolyolen besonders durch eine sehr hohe Flexibilität, insbesondere bei tiefen Temperaturen bis ca. -45°C, eine hohe Deckkraft bei gutem Verlauf sowie hohen Glanz aus. Problematisch jedoch ist ihre nur mäßige Lösemittel- und Chemikalien-Beständigkeit sowie ihre mangelnde Oberflächenhärte. Demgegenüber erreichen Polyacrylatpolyole keine zu Polyesterpolyolen vergleichbaren Flexibilitätseigenschaften.

Der vorliegenden Erfindung lag daher die Aufgabe zugrunde, neue Polyol-Komponenten bereitzustellen, die die bekannten Vorteile der Polyesterpolyole mit denen der Polyacrylatpolyole vereinen und zu Beschichtungssystemen führen, die gleichzeitig die folgenden Anforderungen erfüllen:
1. Vergilbungsfreie Filmoberflächen bei Einwirkung von Hitze (Thermovergilbung): der Lackfilm muss der Einwirkung von Hitze (120°C) über einen Zeitraum von mindestens 20 h ohne wesentliche Vergilbung (Zunahme des ΔE < 3) standhalten.
2. Tieftemperatur-Elastizität: auch bei -20°C darf der Film bei Verformung des Kunststoffs nicht reißen.
3. Beständigkeit gegen Lösemittel und Chemikalien sowie Teerflecken: der Lackfilm muss eine Einwirkung von Lösemitteln und Chemikalien sowie einer speziellen teerhaltigen Testlösung unbeschadet überstehen.
4. Gute Glanzhaltung und hohe Kratzfestigkeit: der Lackfilm auf den Kunststoffteilen soll möglichst haltbar sein und unter mechanischer Belastung und Witterungseinflüssen nicht schneller Verkratzen und/oder im Glanz abbauen als derjenige auf der Metallkarosserie (DIN 67 530, ISO 2813).
5. Keine Nachversprödung bei Bewitterung: auch nach längerer Bewitterung darf der Film keinen Verlust der Tieftemperaturelastizität zeigen.
6. Niedrige Trockentemperatur bei möglichst kurzen Trocknungszeiten aus Gründen der Energieersparnis und um auch thermoempfindliche Kunststoffteile lackieren zu können. Außerdem ermöglichen Trocknungstemperaturen <80°C die Verwendbarkeit in Autoreparaturlacken, so dass nicht nur eine Eignung für die Erstlackierung gegeben ist.
7. Lackfilmhärte: bei einer Tieftemperatur-Elastizität von -40°C soll der Lackfilm eine Härte von >80 s (Pendeldämpfung nach König) erreichen. Bei einer Tieftemperatur-Elastizität von -20°C soll die Lackfilmhärte einen Wert von mindestens 125 s erreichen.

Darüber hinaus sollen die Polyolkomponenten eine möglichst niedrige Viskosität (<3000 mPas/23°C) bei möglichst hohem Festkörper (>70 Gew.-%) haben, um sie in lösemittelarmen Beschichtungssystemen einsetzen zu können.

Es wurde nun gefunden, dass Polyolkomponenten auf Basis von Polyesterpolyolen in Kombination mit speziellen Lacton-basierenden Polyolen zu Polyurethanbeschichtungen führen, die die oben genannten Anforderungen erfüllen.

Gegenstand der Erfindung sind daher Bindemittelzusammensetzungen, enthaltend:
A) ein oder mehrere Polyesterpolyole mit einer OH-Zahl von 50 bis 300 mg KOH/g erhältlich durch Umsetzung von
   a) 48 bis 40 Mol-% einer Carbonsäurekomponente enthaltend
      a1) eine oder mehrere aliphatische, cycloaliphatische, araliphatische oder aromatische Carbonsäuren einer COOH-Funk-tionalität ≥ 2 oder deren Anhydride und
      a2) gegebenenfalls aromatische, cycloaliphatische, araliphatische und/oder aliphatische Monocarbonsäuren
      mit
   b) 52 bis 60 Mol-% einer Alkoholkomponente enthaltend
      b1) ein oder mehrere aliphatische, cycloaliphatische oder araliphatische Polyole eines zahlenmittleren Molekulargewichts von 62 bis 272 g/mol, einer mittleren OH-Funktionalität ≥2 und
      b2) gegebenenfalls aliphatische, cycloaliphatische und/oder araliphatische Monoalkohole,
B) ein oder mehrere Lacton-basierende Polyole mit einer mittleren OH-Funktionalität ≥ 2,
C) ein oder mehrere gegenüber OH-Gruppen reaktive Polyisocyanate einer NCO-Funktionalität ≥2 und
D) optional Lösemittel, Hilfs- und Zusatzstoffe.

In der Komponente a1) können alle aromatischen Di- oder Polycarbonsäuren bzw. -anhydride mit mindestens 2 Carbonsäuregruppen und bevorzugt 8 - 10 Kohlenstoffatomen eingesetzt werden. Besonders bevorzugt sind Phthalsäure, Isophthalsäure, Terephthalsäure, Trimellitsäure, Phthalsäureanhydrid, Trimellitsäureanhydrid, Pyromellitsäure, Pyromellitsäuredianhydrid, ganz besonders bevorzugt sind Phtalsäureanhydrid und Isophthalsäure.

In der Komponente a1) können alle aliphatischen gesättigten Dicarbonsäuren bzw. -anhydride mit bevorzugt 2 - 14 Kohlenstoffatomen bzw. deren Anhydride eingesetzt werden. Besonders bevorzugt sind Oxalsäure, Bernsteinsäure, Glutarsäure, Adipinsäure, Dodecandisäure und Tetradecandisäure, ganz besonders bevorzugt ist Adipinsäure.

In der Komponente a1) können alle aliphatischen ungesättigten Dicarbonsäuren bzw. - anhydride mit bevorzugt 4 - 6 Kohlenstoffatomen bzw. deren Anhydride eingesetzt werden. Besonders bevorzugt sind Fumarsäure, Maleinsäure und Itaconsäure beziehungsweise die möglichen Anhydride dieser Säuren. Ganz besonders bevorzugt ist Maleinsäureanhydrid.

In der Komponente a1) können alle cycloaliphatischen gesättigten oder ungesättigten Dicarbonsäuren bzw. -anhydride mit bevorzugt 6 - 11 Kohlenstoffatomen bzw. deren Anhydride eingesetzt werden. Besonders bevorzugt sind Tetrahydrophthalsäure, Hexahydrophthalsäure, Tetrahydrophthalsäureanhydrid, Hexahydrophthalsäureanhydrid und Norbornendicarbonsäure, ganz besonders bevorzugt ist Hexahydrophthalsäureanhydrid.

In der Komponente a2) können alle einwertigen aromatischen, aliphatischen, araliphatischen oder cycloaliphatischen, gegebenenfalls ungesättigten, Carbonsäuren mit bevorzugt 1 bis 18 Kohlenstoffatomen eingesetzt werden. Besonders bevorzugt sind Ameisensäure, Essigsäure, Propionsäure, Buttersäure, Isobuttersäure, Valeriansäure, 2-Methylbutansäure, 3-Methylbutansäure, 2,2-Dimethylpropansäure, 2-Ethylbutansäure, 2-Ethylhexansäure, Octansäure, Decansäure, Dodecansäure, Tetradecansäure, Hexadecansäure, Octadecansäure, gesättigte und ungesättigte C₁₆-C₁₈-Fettsäuren, Benzoesäure, Phenylessigsäure, Cyclohexancarbonsäure und Cyclohexensäure. Ganz besonders bevorzugt sind 2-Ethylhexansäure, gesättigte und ungesättigte C₁₆-C₁₈-Fettsäuren, Benzoesäure und Cyclohexancarbonsäure.

Die Verbindungen der Komponente a1) bzw. a2) können sowohl einzeln auch in beliebigen Mischungen untereinander verwendet werden.

In der Komponente b1) können alle zweiwertigen, aliphatischen, gegebenenfalls Ethersauerstoffatome aufweisenden, Alkohole mit mindestens 2, vorzugsweise 2 bis 12 Kohlenstoffatomen, eingesetzt werden. Besonders bevorzugt sind Ethylenglykol, Propandiol-1,2 und -1,3, Butandiol-1,2 und -1,4, Diethylenglykol, Pentandiol-1,5, Hexandiol-1,6, Neopentylglykol, 2-Ethyl-2-butylpropandiol, 2-Ethyl-1,3-hexandiol, Decandiol-1,10, Dodecandiol-1,2 und -1,12, ganz besonders bevorzugt sind Ethylenglykol, Propylenglykol, Neopentylglykol und Hexandiol-1,6.

In der Komponente b1) können alle zweiwertigen, cycloaliphatischen, gegebenenfalls Ethersauerstoffatome aufweisenden, Alkohole mit mindestens 4, vorzugsweise 6 bis 15 Kohlenstoffatomen, eingesetzt werden. Besonders bevorzugt sind Cyclohexandimethanol, Cyclohexandiol-1,2, -1,3 und - 1,4, 2,2-Bis(4-hydroxycyclohexyl)-propan und Octahydro-4,7-methano-1H-indendimethanol.

In der Komponente b1) können alle höher als zweiwertigen, aliphatischen, araliphatischen Alkohole mit mindestens 3, vorzugsweise 3 bis 6 Kohlenstoffatomen, eingesetzt werden. Besonders bevorzugt sind Glycerin, Trimethylolpropan, Trimethylolethan, Pentaerythrit und Sorbit.

In der Komponente b2) können alle einwertigen, aliphatischen, araliphatischen oder cycloaliphatischen Alkohole mit 1 bis 18, vorzugsweise 1 bis 12 Kohlenstoffatomen, eingesetzt werden. Besonders bevorzugt sind Ethanol, 1- und 2-Propanol, 1- und 2-Butanol, Isobutanol, tert.-Butanol, 1-, 2-und 3-Pentanol, 2-Methyl-1-butanol, 3-Methyl-1-butanol, 2,2-Dimethylpropanol, 1-, 2- und 3-Hexanol, 4-Methyl-2-pentanol, 2-Ethyl-1-butanol, 2,2-Dimethylpropanol, 1-Octanol, 2-Ethyl-1-hexanol, 1-Nonanol, Trimethyl-1-hexanol, 1-Decanol, 1-Dodecanol, 1-Tetradecanol, 1-Hexadecanol, 1-Octadecanol, Cyclohexanol, 2-, 3- und 4-Methylcyclohexanol, Hydroxymethylcyclohexan, 3,3,5-Trimethylcyclohexanol, 4-tert.-Butylcyclohexanol, 1-Methyl-4t-isopropyl-cyclohexanol (= (-)-Menthol), Decahydro-2-naphthol, (1R-endo)-1,7,7-Trimethyl-bicyclo[2,2,1]heptan-2-ol, (IR-exo)-1,7,7-Trimethyl-bicyclo[2,2,1]heptan-2-ol und (1R)-6,6-Dimethyl-bicyclo[3,1,1]hept-2-en-2-methanol. Ganz besonders bevorzugt sind 1-Hexanol, 2-Ethylhexanol und Cyclohexanol.

Die Verbindungen der Komponente b1) bzw. b2) können sowohl einzeln auch in beliebigen Mischungen untereinander verwendet werden.

Die Verbindungen der Komponente B) werden hergestellt durch Umsetzung von Alkoholen mit cyclischen Lactonen. Gegebenenfalls können sie noch weiter mit Carbonatgruppen enthaltenden Verbindungen, wie z. B. Dimethylcarbonat und Diphenylcarbonat, umgesetzt werden zu Ester- und Carbonatgruppen enthaltenden Polyolen.

Bei den Verbindungen der Komponente B) handelt sich vorzugsweise um ε-Caprolacton-basierende Polyole mit einer mittleren OH-Funktionalität von ≥2, vorzugsweise ≥2,5, besonders bevorzugt ≥3, einem zahlenmittleren Molekulargewicht von 119 bis 2.500, vorzugsweise 119 bis 2.200, besonders bevorzugt 119 bis 2.000 und ganz besonders bevorzugt 119 bis 1.500 g/Mol. Der Hydroxylgehalt der Polyole der Komponente B) liegt bei 1,0 bis 50 Gew.-%, vorzugsweise 1,3 bis 45 Gew.-%, besonders bevorzugt 1,6 bis 40 Gew.-% und ganz besonders bevorzugt 9,0 bis 36 Gew.-%.

Bei der Herstellung der Polyole der Komponente B) kommen monomere oder oligomere Polyole einer mittleren OH-Funktionalität ≥ 2 zum Einsatz, die mit ε-Caprolacton unter ringöffnender Reaktion umgesetzt werden. Geeignete Polyole in diesem Zusammenhang sind beispielsweise Ethylenglycol, Diethylenglycol, Propylenglycol, Butandiol-1,4, Hexandiol-1,6, Cyclohexan-1,4-dimethanol, Trimethylolpropan, Trimethylolethan, Pentaerythrit, Trishydroxyethylisocyanurat, Glycerin oder Sorbit.

Die Reaktion der genannten Ausgangspolyole mit ε-Caprolacton ist dem Fachmann bekannt [A. Balas, G. Palka, J. Foks und H. Janik, J. Appl. Polym. Sci. 29 (1984) 2261] und erfolgt bei Temperaturen von 100 bis 250°C, vorzugsweise 120 bis 200°C und besonders bevorzugt 140 bis 180°C. Sie kann mittels Katalysatoren, wie z. B. zinnorganischen Verbindungen wie Dibutylzinndilaurat, beschleunigt werden.

Die entstandenen, mit ε-Caprolacton modifizierten Polyole können z. B. durch Umsetzung mit Diphenylcarbonat oder Dimethylcarbonat zu Carbonat- und Estergruppen aufweisenden, ε-Caprolacton modifizierten Polyolen weiter modifiziert werden.

Die vorstehend beschriebenen ε-Caprolacton-basierenden Polyole der Komponente B) sind farbhelle, viskose Harze, die mit den Polyestern der Komponente A) gut verträglich sind.

Der Hydroxylgruppengehalt (bezogen auf Festharz) der Bindemittelkomponenten A) und B) zusammen beträgt 4,0 bis 20,0 Gew.-%, vorzugsweise 4,5 bis 17,0 Gew.-%, besonders bevorzugt 5,0 bis 14,0 Gew.-% und ganz besonders bevorzugt 5,5 bis 12,0 Gew.-%.

Neben den Polyolen der Komponenten A) und B) können prinzipiell auch weitere aus der Polyurethanlacktechnologie bekannte, organische Polyhydroxylverbindungen und/oder aminische Reaktivverdünner eingesetzt werden. Bei diesen anderen Polyhydroxylverbindungen kann es sich um die üblichen Polyether-, Polycarbonat-, Polyurethan-, Polyester- oder Polyacrylatpolyole handeln.

Vorzugsweise werden als weitere organische Polyhydroxylverbindungen, falls solche überhaupt neben A) und B) zum Einsatz gelangen, die an sich bekannten Polyacrylatpolyole, Polyesterpolyole und/oder Polycarbonatpolyole des Standes der Technik eingesetzt. Bei den aminischen Reaktivverdünnern kann es sich um Produkte mit blockierten Aminogruppen, wie z. B. Aldimine oder Ketimine, oder um solche, die noch freie, jedoch in ihrer Reaktivität abgeschwächte Aminogruppen aufweisen, wie z. B. Asparaginsäureester, handeln. In aller Regel weisen die aminischen Reaktivverdünner mehr als eine (blockierte) Aminogruppe auf, so dass sie bei der Vemetzungsreaktion zum Aufbau des polymeren Lackfilmnetzwerkes beitragen.

Bei der erfindungsgemäßen Verwendung der erfindungswesentlichen Bindemittelkomponenten, bestehend aus A) und B), können diese in Abmischung mit bis zu 50, vorzugsweise bis zu 30 Gew.-%, an anderen Polyolen und/oder aminischen Reaktivverdünnern der beispielhaft genannten Art zum Einsatz gelangen.

Besonders bevorzugt werden jedoch ausschließlich Polyole der Komponenten A) und B) eingesetzt.

Als Vernetzer der Komponente C) werden bevorzugt die an sich in der Lackchemie bekannten Urethan-, Uretdion-, Allophanat-, Biuret-, Iminooxadiazindion- und/oder Isocyanuratgruppenhaltigen Polyisocyanate in gegebenenfalls ganz oder teilweise NCO-blockierter Form verwendet, die durch dem Fachmann bekannte Modifizierungen monomerer aliphatischer, cycloaliphatischer, araliphatischer und/oder aromatischer Diisocyanate zugänglich sind. Als Diisocyanate sind beispielhaft zu nennen 1,6-Diisocyanatohexan, 1-Isocyanato-3,3,5-trimethyl-5-isocyanatomethylcyclohexan (Isophorondiisocyanat), 4,4'-Diisocyanatodicyclohexylmethan, 1,4-Diisocyanatocyclohexan, 1-Methyl-2,4-diisocyanatocyclohexan, 1-Methyl-2,6-diisocyanatocyclohexan, 4-Isocyanatomethyl-1,8-octandiisocyanat sowie deren Gemische.

Gegebenenfalls kann in C) auch Diisocyanatotoluol (TDI) und seine Isomeren-Gemische mit bis zu 35 Gew.-% 2,6-Diisocyanatotoluol, bezogen auf Gesamtmenge an TDI, enthalten sein.

Die Herstellung dieser Lackpolyisocyanate, ausgehend von monomeren Diisocyanaten, ist dem Fachmann geläufig und wird auf den nächsten Seiten unter Angabe von relevanten Literaturstellen beschrieben. Es ist dabei unerheblich, ob die eingesetzten Diisocyanate nach Phosgen- oder phosgenfreien Verfahren hergestellt wurden.

Die Lackpolyisocyanate der vorstehend genannten Art weisen bevorzugt einen Gehalt an NCO-Gruppen von 2 bis 25 Gew.-%, eine mittlere NCO-Funktionalität von 2,0 bis 5,0, besonders bevorzugt 2,8 bis 4,0 und einen Restgehalt an, zu ihrer Herstellung eingesetzten, monomeren Diisocyanaten von unter 1 Gew.-%, besonders bevorzugt unter 0,5 Gew.-% auf.

Bevorzugte Lackpolyisocyanate der vorstehend genannten Art sind diejenigen mit aliphatisch und/oder cycloaliphatisch gebundenen, freien Isocyanatgruppen.

Die vorstehend genannten Lackpolyisocyanate können auch ganz oder teilweise blockierte NCO-Gruppen aufweisen. Methoden zur Herstellung blockierter Polyisocyanate sowie Blockierungsreagenzien sind dem Fachmann bekannt. Bevorzugte Blockierungsmittel sind beispielsweise ε-Caprolactam, Butanonoxim, Triazol, Phenol, Phenolderivate, sekundäre Amine und/oder Malonsäurealkylester.

Urethangruppen-aufweisende Lackpolyisocyanate sind beispielsweise die Umsetzungsprodukte von 2,4- und gegebenenfalls 2,6-Diisocyanatotoluol oder 1-Methyl-2,4- und gegebenenfalls 1-Methyl-2,6-diisocyanatocyclohexan mit unterschüssigen Mengen an Trimethylolpropan oder dessen Gemischen mit einfachen Diolen, wie z. B. den isomeren Propan- oder Butandiolen. Die Herstellung derartiger, Urethangruppen aufweisender, Lackpolyisocyanate in nahezu monomerfreier Form ist beispielsweise in der DE-A 109 01 96 beschrieben.

Besonders bevorzugte Lackpolyisocyanate sind diejenigen der vorstehend genannten Art mit Biuret-, Isocyanurat- und/oder Iminooxadiazindionstrukturen.

Biuretgruppen-aufweisende Lackpolyisocyanate und deren Herstellung sind beispielsweise in EP-A 0 003 505, DE-A 110 139 4, US-A 3358010 oder US-A 3 903 127 beschrieben.

Zu den Isocyanuratgruppen-aufweisenden Lackpolyisocyanaten gehören die Trimerisate oder Mischtrimerisate der oben beispielhaft genannten Diisocyanate, wie z. B. die Isocyanuratgruppen aufweisenden Polyisocyanate auf TDI-Basis gemäß GB-A 1 060 430, GB-A 1 506 373 oder GB-A 1 485 564, die Mischtrimerisate aus TDI mit 1,6-Diisocyanatohexan, die beispielsweise gemäß DE-A 164 480 9 oder DE-A 314 467 2 zugänglich sind. Besonders bevorzugte Isocyanuratgruppen-aufweisende Lackpolyisocyanate sind die aliphatischen, aliphatisch/cycloaliphatischen und/oder cycloaliphatischen Trimerisate oder Mischtrimerisate auf Basis von 1,6-Diisocyanatohexan und/oder Isophorondiisocyanat, die beispielsweise gemäß US-B 4 324 879, US-B 4 288 586, DE-A 310 026 2, DE-A 310 026 3, DE-A 303 386 0 oder DE-A 314 467 2 erhältlich sind.

Iminooxadiazindiongruppen aufweisende Lackpolyisocyanate und deren Herstellung sind beispielweise in EP-A 798 299, EP-A 896 009, EP-A 962 454 und EP-A 962 455 zu finden.

In den erfindungsgemäßen Bindemittelzusammensetzungen beträgt das Verhältnis zwischen gegenüber OH-Gruppen reaktiven Funktionen der Komponente C) und den Hydroxylgruppen der Komponenten A) + B) 5 : 1 bis 1 : 2, bevorzugt 1,5 : 1 bis 1 : 1,2.

In einer bevorzugten Ausführungsform der Erfindung setzt sich die Mischung der Komponenten A) bis C) aus 65 bis 40 Gew.-Teilen A), 1 bis 25 Gew.-Teilen B) und 25 bis 59 Gew.-Teilen C) zusammen, wobei sich die angegebenen Mengen zu 100 aufaddieren.

In einer besonders bevorzugten Ausführungsform der Erfindung setzt sich die Mischung der Komponenten A) bis C) aus 60 bis 40 Gew.-Teilen A), 5 bis 20 Gew.-Teilen B) und 30 bis 50 Gew.-Teilen C) zusammen, wobei sich die angegebenen Mengen zu 100 aufaddieren.

In den erfindungsgemäßen Bindemittelzusammensetzungen können neben den Komponenten A) - C) auch als Komponente D) die dem Fachmann an sich bekannten Lösemittel sowie Hilfs- und Zusatzstoffe enthalten sein.

Als optionale Lösemittel kommen beispielsweise in Betracht: Ethylacetat, n-Propylacetat, iso-Propylacetat, n-Butylacetat, n-Hexylacetat, n-Heptylacetat, 2-Ethylhexylacetat, Methoxypropylacetat, Methylethylketon, Methylisobutylketon, Toluol, Xylol, höhere Aromatengemische, Testbenzin oder beliebige Gemische dieser Lösungsmittel.

Sofern Lösemittel mitverwendet werden, beträgt ihr Gehalt, bezogen auf die gesamte Bindemittelzusammensetzung, 5 bis 50 Gew.-%, vorzugsweise 10 bis 45 Gew.-%.

Weitere, gegebenenfalls mitzuverwendende Hilfs- und Zusatzstoffe sind beispielsweise Weichmacher, wie z. B. Trikresylphosphat, Phthalsäurediester, Chlorparaffine; Pigmente und Füllstoffe, wie Titandioxid, Bariumsulfat, Kreide, Ruß; Katalysatoren, wie z. B. N,N-Dimethylbenzylamin, N-Methylmorpholin, Zinkoctoat, Zinn-II-octoat oder Dibutylzinndilaurat; Verlaufsmittel; Verdickungsmittel; gegebenenfalls Stabilisatoren, wie substituierte Phenole; organofunktionelle Silane als Haftvermittler sowie Lichtschutzmittel und UV-Absorber. Derartige Lichtschutzmittel sind beispielsweise sterisch gehinderte Amine, wie sie z. B. in DE-A 241 735 3 und DE-A 245 686 4 beschrieben sind. Besonders bevorzugte Lichtschutzmittel sind Bis-(1,2,2,6,6-pentamethylpiperidyl-4)-sebacat, Bis-(2,2,6,6-tetramethylpiperidyl-4)-sebacat, n-Butyl-(3,5-di-tert.-butyl-4-hydroxybenzyl)-malonsäure-bis-(1,2,2,6,6-pentamethylpiperidyl-4)-ester.

Die den Füllstoffen und Pigmenten anhaftende Feuchtigkeit kann durch vorhergehende Trocknung oder durch Mitverwendung von wasseraufnehmenden Stoffen, wie z. B. Molekularsieb-Zeolithen, entfernt werden.

Die Lösemittel, Hilfs- und Zusatzstoffe können entweder dem fertigen Gemisch der Komponenten A) - C) oder den Einzelkomponenten vor deren Durchmischung hinzugefügt werden.

Die Viskosität der erfindungsgemäßen Bindemittelzusammensetzungen, unmittelbar gemessen nach der Vereinigung der Komponenten A) bis C) sowie aller optionalen Bestandteile, beträgt 20 bis 40 s (Auslaufzeit aus ISO 5 mm Becher bei 23°C) bei einem Festkörpergehalt von 50 bis 70 Gew.-%.

Abhängig davon, wie hoch die Reaktivität der Komponenten A) + B) mit der Polyisocyanatkomponente C) ist, haben die erfindungsgemäßen Bindemittelzusammensetzungen eine mehr oder weniger lange Topfzeit.

Die Trocknung der aus den erfindungsgemäßen Bindemittelzusammensetzungen hergestellten Lackfilme erfolgt bei Raumtemperatur und bedarf prinzipiell keiner Temperaturerhöhung. Zur Verkürzung der Trocknungs- oder Aushärtedauer kann je nach Anwendungsgebiet und Substrat selbstverständlich eine Temperaturerhöhung auf 60 bis 120°C während eines Zeitraumes von 10 bis 60 Minuten angewendet werden.

Im applikationsfertigen Zustand zeichnen sich die Lacke auf Basis der erfindungsgemäßen Bindemittelkombinationen durch einen hohen Festkörper und geringe Lösemittelgehalte bei gleichzeitig niedriger Viskosität aus.

Die nach Aushärtung resultierenden Lackfilme haben eine hohe Härte, eine sehr gute Tieftemperaturelastizität, eine ausgezeichnete Witterungs-, Lösemittel- und Chemikalienbeständigkeit, eine sehr gute Kratzfestigkeit sowie einen hohen Glanz. Die Härtungszeiten sowohl für die physikalische Antrocknung als auch die chemische Vernetzung sind kurz, so dass entsprechend beschichtete Gebrauchsgegenstände sehr schnell gegenüber Lösemitteln und Chemikalien resistent sind und in Gebrauch genommen werden können. Besonders überraschend ist die sehr gute Tieftemperaturflexibilität der Beschichtungen bei gleichzeitig hoher Härte und sehr guter Lösemittel- und Chemikalienbeständigkeit. Dies sind normalerweise gegensätzliche Eigenschaften, die bisher nicht gleichzeitig erreichbar waren.

Die erfindungsgemäßen Beschichtungsmittel eignen sich daher vor allem für die Lackierung von Kunststoffen, insbesondere von Kunststoffanbauteilen in der Automobilindustrie. Aufgrund der erzielbaren hohen Lackfilmhärten eignen sich die erfindungsgemäßen Beschichtungsmittel aber auch sehr gut für die Beschichtung von Metallen, wie z. B. bei der Lackierung von Großfahrzeugen, wie z. B. Flugzeugen, Eisenbahn- und Straßenbahnwaggons, LKW-Aufbauten und dergleichen. Ein weiteres bevorzugtes Einsatzgebiet besteht in ihrer Verwendung als Autoserien- und Autoreparaturlack. Weiterhin geeignet sind die Lacke für Korrosionsschutzanwendungen, wie z. B. die Beschichtung von Brücken und Strommasten, für die allgemeine Industrielackierung, die Holz- und Möbellackierung und Glaslackierung

Die Applikation der erfindungsgemäßen Bindemittelzusammensetzungen erfolgt nach üblichen Methoden, beispielsweise durch Spritzen, Gießen, Tauchen, Fluten, Streichen, Sprühen oder Walzen. Die erfindungsgemäßen Lacke eignen sich sowohl zur Herstellung von Grundierungen als auch zur Herstellung von Zwischenschichten und zur Herstellung von Deckschichten, insbesondere Klarlacken, auf den zu lackierenden Substraten.

Geeignete Substrate sind beispielsweise ggf. zuvor grundierte Kunststoffe, aber auch Metalle, Hölzer, Holzersatzstoffe wie beispielsweise Press-Span- oder Holzfaserplatten, Gläser, Stein, Keramik, Beton.

### Beispiele:

Alle Prozentangaben beziehen sich, sofern nicht abweichend vermerkt, auf Gewichtsprozent.

Als Kenndaten wurden der Festgehalt (Dickschichtmethode: Deckel, 1 g Probe, 1 h 125°C im Konvektionsofen, Grundlage DIN EN ISO 3251), die Säurezahl (mg KOH/g Probe, Titration mit 0,1 mol/l NaOH-Lösung, Grundlage DIN 53402), die Viskosität (Rotationsviskosimeter VT 550 der Firma Haake GmbH, Karlsruhe, DE, MV-DIN Becher bei Viskosität < 10.000 mPas/23 °C), die OH-Zahl (mg KOH/g Probe, Acetylierung, Hydrolyse, Titration mit 0,1 mol/l NaOH, Grundlage DIN 53240) und die Hazen-Farbzahl (Hazen-Farbzahl nach DIN 53995, Farbzahlmessgerät Lico® 400, Dr. Lange GmbH, Berlin, DE) bestimmt. Die Säure- und OH-Zahl werden sowohl für die Lieferform (Lff.) und für das Festharz (FH) angegeben. Der OH-Gehalt kann aus der OH-Zahl mittels Division durch 33 errechnet werden.

### Beispiel 1:

### Herstellung der erfindungswesentlichen Polyesterpolyole A)

### Polyesterpolyol A1)

1525 g Neopentylglykol, 665 g Trimethylolpropan, 396 g 1,2-Propandiol, 1033 g Maleinsäureanhydrid, 1420 g Adipinsäure und 0,45 g Fascat® 4100 (Elf Atochem Vlissingen B.V., Vlissingen-Oost, NL) wurden in einen 5-1-Rührkessel, der mit einem Rührer, einer Destillationsbrücke mit Kolonne und einem Stickstoffeinleitungsrohr ausgerüstet ist, eingewogen und unter einer Kopftemperaturbegrenzung von max. 102°C auf 200°C aufgeheizt. Während der Aufheizphase wurde das doppelte Kesselvolumen N₂/h durchgeleitet. Dabei wurde das Reaktionswasser abgespalten und gegen Ende der Abspaltung eine Sumpftemperatur von 200°C erreicht. Es wurde dann bei 200°C so lange kondensiert, bis eine Säurezahl von ≤3 mg KOH/g erreicht war. Es resultierten 3980 g eines Polykondensationsproduktes mit einer Säurezahl von 2,7 mg KOH/g und einer OH-Zahl von 175 mg KOH/g. Zu 3600 g dieses Harzes wurden bei 120°C unter Rühren 900 g Butylacetat gegeben. Es resultierte eine Lösung mit einem Feststoffgehalt von 80 Gew.-%, einer Säurezahl von 2,1 mg KOH/g, einer OH-Zahl von 140 mg KOH/g und einer Viskosität von 2595 mPa·s.

### Polyesterpolyol A2)

1712 g 1,6-Hexandiol, 486 g Trimethylolpropan, 1507 g Isophthalsäure, 527 g Adipinsäure und 268 g Phthalsäureanhydrid wurden in einen 5-1-Rührkessel, der mit einem Rührer, einer Destillationsbrücke mit Kolonne und einem Stickstoffeinleitungsrohr ausgerüstet ist, eingewogen und unter einer Kopftemperaturbegrenzung von max. 102°C auf 230°C aufgeheizt. Während der Aufheizphase wurde das doppelte Kesselvolumen N₂/h durchgeleitet. Dabei wurde das Reaktionswasser abgespalten und gegen Ende der Abspaltung eine Sumpftemperatur von 230°C erreicht. Es wurde dann bei 230°C so lange kondensiert, bis eine Säurezahl von ≤3 mg KOH/g erreicht war. Es resultierten 3990 g eines Polykondensationsproduktes mit einer Säurezahl von 2,5 mg KOH/g und einer OH-Zahl von 180 mg KOH/g. Zu 3600 g dieses Harzes wurden bei 120°C unter Rühren 900 g Butylacetat gegeben. Es resultierte eine Lösung mit einem Feststoffgehalt von 80 Gew.-%, einer Säurezahl von 2,0 mg KOH/g, einer OH-Zahl von 144 mg KOH/g und einer Viskosität von 2350 mPa·s.

### Beispiel 2:

### Polyol B1:

In einen Reaktor gemäß Beispiel 1 wurden 3155 g Trimethylolpropan und 1345 g ε-Caprolacton und 2,2 g Dibutylzinndilaurat (DBTL) eingewogen. Der Kesselinhalt wurde auf 160°C aufgeheizt, 6 Stunden bei 160°C gerührt und anschließend auf 20°C abgekühlt, wobei ein Harz mit folgenden Kenndaten erhalten wurde:

| | |
|---|---|
| Festgehalt: | 99,5 Gew.-% |
| Viskosität bei 23°C: | 4100 mPa·s |
| Säurezahl: | 0,5 mg KOH/g |
| Hydroxylzahl: | 881 mg KOH/g |
| Hydroxylgehalt: | 26,7 Gew.-% |
| Hazen-Farbzahl: | 44 APHA |
| Aussehen: | klar |

### Polyol B2

Analog zu Polyol B1 wurden 2012 g Glycerin und 2488 g ε-Caprolacton in Gegenwart von 2,2 g DBTL umgesetzt. Es resultierte ein Harz mit folgenden Kenndaten:

| | |
|---|---|
| Festgehalt: | 99,4 Gew.-% |
| Viskosität bei 23 °C: | 1091 mPa·s |
| Säurezahl: | 0,9 mg KOH/g |
| Hydroxylzahl: | 840 mg KOH/g |
| Hydroxylgehalt: | 25,5 Gew.-% |
| Hazen-Farbzahl: | 32 APHA |
| Aussehen: | klar |

### Polyol B3

Analog zu Polyol B1 wurden 1266 g Trimethylolpropan und 3231 g ε-Caprolacton in Gegenwart von 2,2 g DBTL umgesetzt. Es resultierte ein Harz mit folgenden Kenndaten:

| | |
|---|---|
| Festgehalt: | 99,9 Gew.-% |
| Viskosität bei 23 °C: | 1631 mPa·s |
| Säurezahl: | 0,6 mg KOH/g |
| Hydroxylzahl: | 356 mg KOH/g |
| Hydroxylgehalt: | 10,8 Gew.-% |
| Hazen-Farbzahl: | 16 APHA |
| Aussehen: | klar |

### Polyol B4

Analog zu Polyol B1 wurden 1757 g Trishydroxyethylisocyanurat und 2743 g ε-Caprolacton in Gegenwart von 2,2 g DBTL umgesetzt. Es resultierte ein Harz mit folgenden Kenndaten:

| | |
|---|---|
| Festgehalt: | 99,5 Gew.-% |
| Viskosität bei 23 °C: | 3245 mPa·s |
| Säurezahl: | 1.0 mg KOH/g |
| Hydroxylzahl: | 300 mg KOH/g |
| Hydroxylgehalt: | 9,1 Gew.-% |
| Hazen-Farbzahl: | 52 APHA |
| Aussehen: | klar |

### Polyol B5

Desmophen®C 200, ein lösemittelfreier aliphatischer Polycarbonatester mit einem Hydroxylgruppengehalt von 1,7 Gew.-%, Handelsprodukt der Bayer AG, Leverkusen, DE.

### Vergleichsbeispiel 1

Herstellung eines Polyolbindemittels auf Basis eines Polyacrylat-Polyesterpolyol-Blends als V1

### Herstellung des Polyacrylatpolyols D1:

In einem 5-1-Edelstahldruckreaktor mit Rührer, Destillationseinrichtung, Vorlagebehälter für Monomermischung und Initiator inklusive Dosierpumpen sowie automatischer Temperaturregelung wurden 1575 g Butylacetat vorgelegt und auf 150°C aufgeheizt. Dann wurden durch separate Zuläufe gemeinsam beginnend eine Monomermischung, bestehend aus 1110 g Styrol, 862 g Hydroxyethylmethacrylat, 650 g Butylacrylat und 26 g Acrylsäure in 3 Stunden und eine Initiatorlösung, bestehend aus 97 g Di-tert.-butylperoxid und 180 g Butylacetat in 3,5 Stunden zudosiert, wobei die Polymerisationstemperatur konstant (± 2°C) gehalten wurde. Anschließend wurde 60 Minuten bei 150°C nachgerührt, dann auf Raumtemperatur abgekühlt und der Festgehalt bestimmt. Das Copolymerisat sollte einen Festgehalt von 60± 1 % haben. Es wurde ein Festgehalt von 60,8 Gew.-% ermittelt. Danach wurde das Copolymerisat über einen Filter (Supra T5500, Porengröße 25 - 72 µm, Seitz-Filter-Werke GmbH, Bad Kreuznach, DE) filtriert. Es wurde eine Polymerisatlösung mit folgenden Kenndaten erhalten:

| | |
|---|---|
| Festgehalt: | 61,0 % |
| Viskosität bei 23°C: | 2412 mPa·s |
| Säurezahl, Lff./FH: | 7,0 / 11,5 mg KOH/g |
| Hydroxylzahl, Lff./FH: | 83 / 136 mg KOH/g |
| Hazen-Farbzahl: | 15 APHA |
| Aussehen: | klar |

### Herstellung eines Polyesterpolyols A3:

877 g 2-Ethylhexansäure, 1853 g Trimethylolpropan wurden in einen 5-1-Rührkessel, der mit einem Rührer, einer Destillationsbrücke mit Kolonne und einem Stickstoffeinleitungsrohr ausgerüstet ist, eingewogen und auf 125°C erwärmt. Während der Aufheizphase wurde das einfache Kesselvolumen N₂/h durchgeleitet. Bei 125°C wurden 1282 g Hexahydrophthalsäureanhydrid und 488 g Adipinsäure zugegeben, der N₂-Strom auf das doppelte Kesselvolumen/h gesteigert und unter einer Kopftemperaturbegrenzung von max. 102°C auf 210°C aufgeheizt. Dabei wurde das Reaktionswasser abgespalten und gegen Ende eine Sumpftemperatur von 210°C erreicht. Es wurde dann bei 210°C so lange kondensiert, bis eine Säurezahl von ≤10 mg KOH/g erreicht war. Es resultierten 3980 g eines Polykondensationsproduktes mit einer Säurezahl von 9,6 mg KOH/g und einer OH-Zahl von 180 mg KOH/g. Zu 3375 g dieses Harzes wurden unter Rühren 1125 g Xylol gegeben. Es resultierte eine Lösung mit einem Feststoffgehalt von 75 Gew.-%, einer Säurezahl von 7,1 mg KOH/g, einer OH-Zahl von 135 mg KOH/g und einer Viskosität von 4661 mPa·s.

### Herstellung eines Polyacrylat-Polyesterpolyol-Blends V1:

2965 g des Polyacrylatpolyols D und 1575 g des Polyesterpolyols A3 wurden in einem 5 1 Rührkessel 1 Stunde bei 60°C gerührt, dann auf 30°C abgekühlt und filtriert (Supra T5500, Porengröße 25 - 72 µm, Seitz-Filter-Werke GmbH, Bad Kreuznach, DE). Es resultierte eine Polyester/Polyacrylatlösung, 65 %-ig in Butylacetat/Xylol (3:1), mit folgenden Kenndaten:

| | |
|---|---|
| Festgehalt: | 65,1 % |
| Viskosität bei 23 °C: | 3682 mPa·s |
| Säurezahl, Lff./FH: | 7,0 / 10,7 mg KOH/g |
| Hydroxylzahl, Lff./FH: | 101 / 155 mg KOH/g |
| Hazen-Farbzahl: | 25 APHA |
| Aussehen: | klar |

### Vergleichsbeispiel 2

Als Vergleichspolyol V2 diente Desmophen® A 575, ein elastifiziertes Polyacrylatpolyol mit einem Festgehalt von 75 %ig in Xylol, einer Viskosität von 3500 mPa·s und einem Hydroxylgehalt von ca. 2,8 Gew.-% (bez. auf Lieferform), Handelsprodukt der Bayer AG, Leverkusen, DE.

### Beispiel 3

Herstellung der erfindungswesentlichen Mischungen vom Typ AB aus den Polyestern A1 und A2 und den Lacton-basierenden Polyolen B1 - B5

Polyester vom Typ A und Polyole des Typs B wurden in den angegebenen Mengenverhältnissen miteinander bei 60°C für 60 min verrührt und anschließend mit Butylacetat auf einen Festgehalt von 80 Gew.-% eingestellt.

### Polyol AB1:

Mischung aus Polyester A1 und Polyol B1 im Verhältnis 90:10 (bezogen auf Festharz). Es resultierte ein Polyolharz mit den folgenden Kenndaten:

| | |
|---|---|
| Festgehalt: | 80,0 Gew.-% |
| Viskosität bei 23 °C: | 2732 mPa·s |
| Säurezahl, Lff./FH: | 1,0 / 1,3 mg KOH/g |
| Hydroxylzahl, Lff./FH: | 193 / 241 mg KOH/g |
| Hazen-Farbzahl: | 33 APHA |
| Aussehen: | klar |

### Polyol AB2:

Mischung aus Polyester A1 und Polyol B1 im Verhältnis 85:15 (bezogen auf Festharz). Es resultierte ein Polyolharz mit den folgenden Kenndaten:

| | |
|---|---|
| Festgehalt: | 80,9 Gew.-% |
| Viskosität bei 23 °C: | 2853 mPa·s |
| Säurezahl, Lff./FH: | 0,5 / 0,6 mg KOH/g |
| Hydroxylzahl, Lff./FH: | 227 / 281 mg KOH/g |
| Hazen-Farbzahl: | 53 APHA |
| Aussehen: | klar |

### Polyol AB3:

Mischung aus Polyester A2 und Polyol B1 im Verhältnis 90:10 (bezogen auf Festharz). Es resultierte ein Polyolharz mit den folgenden Kenndaten:

| | |
|---|---|
| Festgehalt: | 79,9 Gew.-% |
| Viskosität bei 23 °C: | 1561 mPa·s |
| Säurezahl, Lff./FH: | 1,5 / 1,9 mg KOH/g |
| Hydroxylzahl, Lff./FH: | 221 / 277 mg KOH/g |
| Hazen-Farbzahl: | 27 APHA |
| Aussehen: | klar |

### Polyol AB4:

Mischung aus Polyester A2 und Polyol B1 im Verhältnis 85:15 (bezogen auf Festharz). Es resultierte ein Polyolharz mit den folgenden Kenndaten:

| | |
|---|---|
| Festgehalt: | 79,6 Gew.-% |
| Viskosität bei 23 °C: | 1501 mPa·s |
| Säurezahl, Lff./FH: | 2,2/2,8 mg KOH/g |
| Hydroxylzahl, Lff./FH: | 211/265 mg KOH/g |
| Hazen-Farbzahl: | 26 APHA |
| Aussehen: | klar |

### Polyol AB5:

Mischung aus Polyester A1 und Polyol B2 im Verhältnis 85:15 (bezogen auf Festharz). Es resultierte ein Polyolharz mit den folgenden Kenndaten:

| | |
|---|---|
| Festgehalt: | 80,0 Gew.-% |
| Viskosität bei 23 °C: | 2442 mPa·s |
| Säurezahl, Lff./FH: | 0,5/0,6 mg KOH/g |
| Hydroxylzahl, Lff./FH: | 195/244 mg KOH/g |
| Hazen-Farbzahl: | 10 APHA |
| Aussehen: | klar |

### Polyol AB6:

Mischung aus Polyester A2 und Polyol B3 im Verhältnis 9:1 (bezogen auf Festharz). Es resultierte ein Polyolharz mit den folgenden Kenndaten:

| | |
|---|---|
| Festgehalt: | 80,3 Gew.-% |
| Viskosität bei 23 °C: | 1852 mPa·s |
| Säurezahl, Lff./FH: | 1,6 / 2,0 mg KOH/g |
| Hydroxylzahl, Lff./FH: | 134 / 167 mg KOH/g |
| Hazen-Farbzahl: | 29 APHA |
| Aussehen: | klar |

### Polyol AB7:

Mischung aus Polyester A1 und Polyol B5 im Verhältnis 95:5 (bezogen auf Festharz). Es resultierte ein Polyolharz mit den folgenden Kenndaten:

| | |
|---|---|
| Festgehalt: | 80,1 Gew.-% |
| Viskosität bei 23 °C: | 3223 mPa·s |
| Säurezahl, Lff./FH: | 0,5 / 0,6 mg KOH/g |
| Hydroxylzahl, Lff./FH: | 130 / 162 mg KOH/g |
| Hazen-Farbzahl: | 65 APHA |
| Aussehen: | klar |

### Polyol AB8:

Mischung aus Polyester A2 und Polyol B2 im Verhältnis 9:1 (bezogen auf Festharz). Es resultierte ein Polyolharz mit den folgenden Kenndaten:

| | |
|---|---|
| Festgehalt: | 79,8 Gew.-% |
| Viskosität bei 23 °C: | 1101 mPa·s |
| Säurezahl, Lff./FH: | 2,2 / 2,8 mg KOH/g |
| Hydroxylzahl, Lff./FH: | 165 / 209 mg KOH/g |
| Hazen-Farbzahl: | 87 APHA |
| Aussehen: | klar |

Gegenüber den Vergleichspolyolen (V1 und V2 sowie den reinen Polyestern A1 und A2) zeichnen sich die erfindungsgemäßen Polyolmischungen vom AB-Typ durch eine meist niedrigere Viskosität bei höherem Festkörpergehalt und einen durchweg höheren Hydroxylgehalt aus.

### Beispiel 4:

### Lacktechnische Prüfungen

Als erfindungsgemäß zu verwendende Polyolmischungen wurden die Polyole AB1-AB5 eingesetzt. Demgegenüber wurden die Vergleichspolyole V1 und V2 und die Polyester A1 und A2, allerdings nicht erfindungsgemäß in Kombination mit einem Polyol vom Typ B, eingesetzt.

Zur Beurteilung der Lackeigenschaften wurden Klarlacke hergestellt. Dazu wurden die Polyolmischungen AB1 - AB5 sowie die Vergleichspolyole V1, V2, A1 und A2 mit 0,1 Gew.-% Baysilone® OL 17 (Verlaufsmittel der Borchers GmbH, Langenfeld, DE), 0,4 Gew.-% BYK 141® (Entschäumungsmittel der BYK-Chemie, Wesel, DE), 1,0 Gew.-% Tinuvin® 1130 (UV-Absorber der Ciba Geigy, Basel, CH, 10 gew.-%-ig in Methoxypropylacetat (MPA)) und 1,0 Gew.-% Tinuvin® 292 (Lichtschutzmittel der Ciba Geigy, Basel, CH, 10 gew.-%-ig in MPA) versetzt (die Mengenangaben in % sind jeweils bezogen auf die zugrundeliegende Menge an Festharz).

Kurz vor der Applikation wurde ein Lackpolyisocyanat C) zugegeben, wobei ein NCO/OH-Verhältnis von ca. 1,1 : 1 eingehalten wurde, und mit einem Gemisch aus Butylacetat/Methoxypropylacetat (MPA) 2:1 auf eine Viskosität von ca. 25 s (Auslaufzeit aus DIN-4-mm Becher bei 23°C) eingestellt. Bis zur Verarbeitung wurde der Lack noch ca. 10 bis 15 Minuten zur Entlüftung stehen gelassen.

Als Lackpolyisocyanat diente Desmodur® N 3390 (Bayer AG, Leverkusen, DE), ein Isocyanuratgruppen enthaltendes Polyisocyanat auf Basis 1,6-Diisocyanatohexan, 90 %-ig gelöst in Butylacetat/ Solvesso® 100 (Esso AG, Köln, DE) (1 : 1); NCO-Gehalt der Lösung: ca. 19,4 Gew.-%.

Die Lacke wurden durch Spritzapplikation mittels einer handelsüblichen Spritzpistole der Firma SATA Farbspritztechnik GmbH Kornwestheim, DE, 1,4 mm Düse, Druck ca. 2 bar in einem Kreuzgang auf den jeweiligen vorbereiteten Untergrund (bei Glas auf einen Basislack von Spies Hecker GmbH, Köln, DE mit der Bezeichnung MB 501 weiß, bei Alu-Platten 300 x 150 mm auf einen Basislack der Spies Hecker GmbH, Köln, DE mit der Bezeichnung Tiefschwarz RAL 9005) appliziert. Nach einer Ablüftzeit von 10 bis 15 Minuten wurden die Lacke 45 Minuten bei 80°C gehärtet und anschließend 16 h bei 60°C gelagert. Die Trockenfilmdicke betrug 40 ± 5 µm. Mit der lacktechnischen Prüfung wurde 2 Stunden nach der Lagerung begonnen.

Es wurden auf Glas die Filmhärte [Pendeldämpfung nach König (DIN EN ISO 1522)], Glanz und Haze im 20°-Winkel (DIN 67 530, ISO 2813), die Anlösbarkeit durch Xylol, Methoxypropylacetat (MPA), Ethylacetat und Aceton sowie die Teerbeständigkeit der Lacke mittels einer speziellen Teerlösung (DBL 7399) der DaimlerChrysler AG, Stuttgart, DE bestimmt. Es wurden auf Alublechen die Beständigkeit gegen Baumharz, Bremsflüssigkeit, Pankreatin (50 %-ig), Natronlauge (1 %-ig) und Schwefelsäure (1 %-ig), die Benzinbeständigkeit (DIN 51604), die Kratzfestigkeit (DIN 55668) und die Thermovergilbungsstabilität (DIN 6174) geprüft.

Ferner wurden die Lacke zur Prüfung der Kälteflexibilität auf zuvor grundierte, 3 mm dicke Kunststoffplatten aus Bayflex® 91 (Bayer AG, Leverkusen, DE) aufgespritzt; 45 Minuten bei 80°C getrocknet und 14 Tage bei Raumtemperatur gelagert; die Trockenfilmdicke betrug ca. 35 µm.

Hieraus gefertigte, 2 cm breite und 15 cm lange Streifen wurden bei verschiedenen Temperaturen (Raumtemperatur; 5°C bis 45°C in 5°C-Schritten) in einer Kältekammer ca. 30 Minuten gelagert und anschließend bei der betreffenden Temperatur in der Kammer so um einen 1-inch-Dorn gebogen, dass sich die beiden Enden des Teststreifens berühren. Diejenige Temperatur, bei der der Lackfilm reißt, gilt als Maß für die Kälteflexibilität. Die aus den Polyolen AB1 bis AB5 hergestellten Lacke entsprachen danach hohen Anforderungen an die Elastizität auch bei tiefen Temperaturen.

Die Prüfergebnisse der erfindungsgemäßen Lacke sind in der nachfolgenden Tabelle 1 und die Prüfergebnisse der Vergleichslacke in der nachfolgenden Tabelle 2 aufgeführt.

**Tabelle 1: Prüfergebnisse der erfindungsgemäßen Lacke**

| Polyol | AB1 | AB2 | AB3 | AB4 | AB5 |
|---|---|---|---|---|---|
| Vernetzer Desmodur® | N 3390 | N 3390 | N 3390 | N 3390 | N 3390 |
| Spritzfestkörper [Gew.-%] | 63,4 | 63,1 | 63,6 | 63,5 | 63,3 |
| Pendeldämpfung nach König [s] | 130 | 168 | 96 | 131 | 143 |
| Lösemittelbeständigkeit [Note]¹⁾ 1 min | 0 0 1 4 | 0 0 1 4 | 1 1 2 2 | 0 0 1 1 | 0 0 1 4 |
| (Xyl./MPA/EA/Aceton) | | | | | |
| Chemikalienbeständigkeit [°C]²⁾ | | | | | |
| Baumharz | 36 | 36 | 36 | 36 | 36 |
| Bremsflüssigkeit | 36 | 36 | 36 | 36 | 36 |
| Pankreatin, 50%ig | 36 | 36 | 36 | 36 | 36 |
| Natronlauge, 1%ig | 46 | 51 | 47 | 47 | 48 |
| Schwefelsäure, 1%ig | 42 | 44 | 43 | 44 | 43 |
| Benzinfestigkeit FAM, 10 min [Note]¹⁾ | 0 | 0 | 0 | 0 | 1 |
| Teerbeständigkeit (DBL 7399³) ΔE⁴⁾ | 3,9 | 2,4 | 20,4 | 13,8 | 2,8 |
| Kratzfestigkeit (Laborwaschanlage)⁵⁾ | | | | | |
| Ausgangsglanz, 20° | 85,0 | 84,8 | 89,9 | 89,4 | 85,6 |
| Glanz nach 10 Zyklen, 20° | 82,7 | 82,6 | 88,8 | 87,5 | 83,3 |
| Glanzverlust (ΔG1.) n. 10 Zyklen, 20° | 2,3 | 2,2 | 1,1 | 1,9 | 2,3 |
| Relativer Restglanz (RR) [%] | 97,3 | 97,4 | 98,8 | 97,8 | 97,3 |
| Thermovergilbung | | | | | |
| Vergilbung nach 20 h 120 °C [ΔE] | 2,3 | 1,8 | 1,6 | 1,3 | 1,9 |
| Biegeelastizität in °C | - 25 | - 20 | - 40 | - 35 | - 25 |

| | | | | | |
|---|---|---|---|---|---|
| ¹⁾ 0 = bester Wert (ohne Befund), 5 = schlechtester Wert (Lackfilm an der belasteten Stelle vollständig aufgelöst) ²⁾ Gradientenofenmethode (je höher die Temperatur bis zur sichtbaren Schädigung, desto beständiger ist der Lackfilm) ³⁾ Spezielle Teerlösung der DaimlerChrysler AG, Stuttgart, DE zur Ermittlung der Teerbeständigkeit von Automobillacken mit folgender Zusammensetzung: 30,5 Gew.-% Carbomasse EP KS® (Rüttgerswerke AG, Hüls Troisdorf, DE) 62,0 Gew.-% Edenol D 81® (Cognis Deutschland GmbH & Co.KG, Düsseldorf, DE) 2,7 Gew.-% Santicizer 160® (FERRO Corp., Walton Hills, Ohio, US) 4,8 Gew.-% Palatinol O® (BASF AG, Ludwigshafen, DE) ⁴⁾ Einwirkdauer Teerlösung: 24 h, danach Abwaschen mit Superbenzin und Beurteilung Unterschied kontaminierte Fläche im Vergleich zu nicht kontaminierter Fläche. ⁵⁾ Alter der Waschbürste ca. 36 Betriebsstunden. | | | | | |

**Tabelle 2 :Prüfergebnisse der Vergleichslacke:**

| Polyol | V1 | V2 | A1 | A2 |
|---|---|---|---|---|
| Vernetzer Desmodur® | N 3390 | N 3390 | N 3390 | N3390 |
| Spritzfestkörper [Gew.-%] | 43,4 | 51,5 | 54,3 | 50,0 |
| Pendeldämpfung nach König [s] | 209 | 119 | 56 | 35 |
| Lösemittelbeständigkeit [Note]¹⁾ 1 min | 0 0 0 1 | 1 1 3 4 | 2 2 4 4 | 2 2 3 4 |
| (Xyl./MPA/EA/Aceton) | | | | |
| Chemikalienbeständigkeit [°C]²⁾ | | | | |
| Baumharz | 44 | 36 | 36 | 36 |
| Bremsflüssigkeit | 36 | 36 | 36 | 36 |
| Pankreatin, 50%ig | 36 | 36 | 36 | 36 |
| Natronlauge, 1%ig | 51 | 56 | 47 | 36 |
| Schwefelsäure, 1%ig | 47 | 44 | 43 | 44 |
| Benzinfestigkeit FAM, 10 min. [Note]¹⁾ | 0 | 1 | 1 | 1 |
| Teerbeständigkeit (DBL 7399³) ΔE⁴⁾ | 0,3 | 12,7 | 16,2 | 35,1 |
| Kratzfestigkeit (Laborwaschanlage)⁵⁾ | | | | |
| Ausgangsglanz, 20° | 89,1 | 88,5 | 84,6 | 88,3 |
| Glanz nach 10 Zyklen, 20° | 71,4 | 84,5 | 82,2 | 87,6 |
| Glanzverlust (ΔG1.) n. 10 Zyklen, 20° | 17,7 | 4,0 | 2,4 | 0,7 |
| Relativer Restglanz (RR) [%] | 80,1 | 95,5 | 97,2 | 99,2 |
| Thermovergilbung Vergilbung nach 20 h 120 °C [ΔE] | 1,8 | 2,1 | 2,0 | 1,2 |
| Biegeelastizität in °C | + 10 | - 15 | - 35 | - 45 |

| | | | | |
|---|---|---|---|---|
| ¹⁾ 0 = bester Wert (ohne Befund), 5 = schlechtester Wert (Lackfilm an der belasteten Stelle vollständig aufgelöst) ²⁾ Gradientenofenmethode (je höher die Temperatur bis zur sichtbaren Schädigung, desto beständiger ist der Lackfilm) ³⁾ Spezielle Teerlösung der DaimlerChrysler AG, Stuttgart zur Ermittlung der Teerbeständigkeit von Automobillacken mit folgender Zusammensetzung: 30,5 Gew.-% Carbomasse EP KS® (Rüttgerswerke AG, Hüls Troisdorf, DE) 62,0 Gew.-% Edenol D 81® (Cognis Deutschland GmbH & Co.KG, Düsseldorf, DE) 2,7 Gew.-% Santicizer 160® (FERRO Corp., Walton Hills, Ohio, US) 4,8 Gew.-% Palatinol O® (BASF AG, Ludwigshafen, DE) ⁴⁾ Einwirkdauer Teerlösung: 24 h, danach Abwaschen mit Superbenzin und Beurteilung Unterschied kontaminierte Fläche im Vergleich zu nicht kontaminierter Fläche. ⁵⁾ Alter der Waschbürste ca. 36 Betriebsstunden | | | | |

Die erfindungsgemäßen Lacke auf Basis der Polyole AB1 - AB5 haben einen sehr hohen Festkörpergehalt bei vorgegebener Applikationsviskosität und liefern Beschichtungen mit guter Lösemittel- und Chemikalienbeständigkeit. Benzinfestigkeit, Glanz, Filmhärte und Thermovergilbung liegen auf hohem Niveau, vergleichbar mit heutigen Standardsystemen (Vergleichsversuche), die allerdings einen wesentlich höheren Lösungsmittelgehalt und daher einen deutlich geringeren Festgehalt bei Applikationsviskosität haben.

Entscheidende Vorteile haben die erfindungsgemäßen Lacke auf Basis der Polyole vom AB-Typ bei der Höhe des Festkörpergehalts bei Applikationsviskosität im Vergleich zu allen Vergleichspolyolen. Im Vergleich zu den Polyolen A1 und A2 ergeben sich für die erfindungsgemäßen Polyole vom AB-Typ deutliche Vorteile bei der Lösemittel- und Chemikalienbeständigkeit bei ähnlich guter Tieftemperaturflexibilität und bei der Filmhärte der resultierenden Beschichtungen. Im Vergleich zu den Polyolen V1 und V2 ergeben sich für die erfindungsgemäßen Polyole vom AB-Typ deutliche Vorteile in der Tieftemperaturelastizität und der Kratzfestigkeit, bei ähnlich guten Werten in der Lösemittel- und Chemikalienbeständigkeit.

Die Prüfergebnisse zeigen somit deutlich, dass Klarlacke auf Basis der erfindungsgemäßen Polyolzusammensetzungen im Vergleich zu Polyolen des Standes der Technik einen deutlich höheren Lackfestkörper bei vorgegebener Applikationsviskosität haben und die Lackfilme neben vergleichbarem lacktechnischen Eigenschaftsniveau eine wesentlich bessere Lösemittel- und Chemikalienbeständigkeit bei ähnlich guter Tieftemperaturelastizität aufweisen als 2K PUR-Lacke auf Basis von Standardpolyolen vom Typ A1 und A2. Im Vergleich zu Standardpolyolen vom Typ V1 und V2 weisen die erfindungsgemäßen Polyole bei ähnlich guter Lösemittel und Chemikalienbeständigkeit eine deutlich bessere Tieftemperaturelastizität und Kratzfestigkeit auf. Somit sind die erfindungsgemäßen Beschichtungsmittel besonders gut geeignet für die Beschichtung von Kunststoffen und Kunststoffanbauteilen, aber aufgrund der hohen Lackfilmhärte auch für Metalle, insbesondere auch bei Kraftfahrzeugen, wo häufig Gemischtbauweise (Kunststoff/Metall) auftritt.

## Patentansprüche

1. Bindemittelzusammensetzungen, enthaltend:
A) ein oder mehrere Polyesterpolyole mit einer OH-Zahl von 50 bis 300 mg KOH/g erhältlich durch Umsetzung von
a) 48 bis 40 Mol% einer Carbonsäurekomponente enthaltend
a1) eine oder mehrere aliphatische, cycloaliphatische, araliphatische oder aromatische Carbonsäuren einer COOH-Funktionalität ≥ 2 oder deren Anhydride und
a2) gegebenenfalls aromatische, cycloaliphatische, araliphatische und/oder aliphatische Monocarbonsäuren
mit
b) 52 bis 60 Mol-% einer Alkoholkomponente enthaltend
b1) ein oder mehrere aliphatische, cycloaliphatische oder araliphatische Polyole eines zahlenmittleren Molekulargewichts von 62 bis 272 g/mol, einer mittleren OH-Funktionalität ≥ 2 und
b2) gegebenenfalls aliphatische, cycloaliphatische und/oder araliphatische Monoalkohole,
B) ein oder mehrere Lacton-basierende Polyole mit einer mittleren OH-Funktionalität ≥ 2,
C) ein oder mehrere gegenüber OH-Gruppen reaktive Polyisocyanate einer NCO-Funktionalität ≥ 2 und
D) optional Lösemittel, Hilfs- und Zusatzstoffe.

2. Bindemittelzusammensetzungen gemäß Anspruch 1, **dadurch gekennzeichnet, dass** in Komponente a1) ein oder mehrere Verbindungen ausgewählt aus der Gruppe bestehend aus Phtalsäureanhydrid, Isophthalsäure, Adipinsäure, Maleinsäureanhydrid, Hexahydrophthalsäureanhydrid sowie deren Mischungen eingesetzt werden.

3. Bindemittelzusammensetzungen gemäß Anspruch 1 oder 2, **dadurch gekennzeichnet, dass** in Komponente a2) ein oder mehrere Verbindungen ausgewählt aus der Gruppe bestehend aus 2-Ethylhexansäure, gesättigte und ungesättigte monofunktionelle C₁₆-C₁₈-Fettsäuren, Benzoesäure und Cyclohexancarbonsäure sowie deren Mischungen eingesetzt werden.

4. Bindemittelzusammensetzungen gemäß einem der Ansprüche 1 bis 3, **dadurch gekennzeichnet, dass** in Komponente b1) ein oder mehrere Verbindungen ausgewählt aus der Gruppe bestehend aus Neopentylglykol, Hexandiol-1,6, Cyclohexandimethanol, Cyclohexandiol-1,2, -1,3 und -1,4, 2,2-Bis(4-hydroxycyclohexyl)-propan, Octahydro-4,7-methano-1H-indendimethanol, Glycerin, Trimethylolpropan, Trimethylolethan, Pentaerythrit, Sorbit sowie deren Mischungen eingesetzt werden.

5. Bindemittelzusammensetzungen gemäß einem der Ansprüche 1 bis 4, **dadurch gekennzeichnet, dass** in Komponente b2) ein oder mehrere Verbindungen ausgewählt aus der Gruppe bestehend aus 1-Hexanol, 2-Ethylhexanol, Cyclohexanol sowie deren Mischungen eingesetzt werden.

6. Bindemittelzusammensetzungen gemäß einem der Ansprüche 1 bis 5, **dadurch gekennzeichnet, dass** die Polyole der Komponente B) auf ε-Caprolacton basieren.

7. Bindemittelzusammensetzungen gemäß Anspruch 6, **dadurch gekennzeichnet, dass** die ε-Caprolacton-basierenden Polyole der Komponente B) eine mittlere OH-Funktionalität von ≥ 3, ein zahlenmittleres Molekulargewicht von 119 bis 1.500 g/mol und einen OH-Gehalt von 9,0 bis 36 Gew.-% aufweisen.

8. Bindemittelzusammensetzungen gemäß einem der Ansprüche 1 bis 7, **dadurch gekennzeichnet, dass** die Polyisocyanate der Komponente C) Urethan-, Uretdion-, Allophanat-, Biuret-, Iminooxadiazindion- und/oder Isocyanuratgruppen aufweisen und auf aliphatischen und/oder cycloaliphatischen Diisocyanaten basieren.

9. Bindemittelzusammensetzungen gemäß Anspruch 8, **dadurch gekennzeichnet, dass** die Polyisocyanate der Komponente C) auf 1,6-Diisocyanatohexan, 1-Isocyanato-3,3,5-trimethyl-5-isocyanatomethylcyclohexan (Isophorondiisocyanat), 4,4'-Diisocyanatodicyclohexylmethan, 1,4-Diisocyanatocyclohexan, 1-Methyl-2,4-diisocyanatocyclohexan, 1-Methyl-2,6-diisocyanatocyclohexan, 4-Isocyanatomethyl-1,8-octandiisocyanat und/oder deren Gemischen basieren.

10. Verwendung der Bindemittelzusammensetzungen gemäß einem der Ansprüche 1 bis 9 zur Beschichtung von ggf. zuvor grundierten Kunststoffen, Metallen, Hölzern, Holzersatzstoffen, Gläsern, Stein, Keramik oder Beton.

11. Beschichtungen erhältlich aus Bindemittelzusammensetzungen gemäß einem der Ansprüche 1 bis 9.

12. Substrate beschichtet mit Beschichtungen gemäß Anspruch 11.

## Claims

1. Binder compositions comprising:
A) one or more polyester polyols having an OH number of from 50 to 300 mg KOH/g, obtainable by reaction of
a) from 48 to 40 mol% of a carboxylic acid component comprising
a1) one or more aliphatic, cycloaliphatic, araliphatic or aromatic carboxylic acids having a COOH functionality ≥ 2, or anhydrides thereof, and
a2) optionally aromatic, cycloaliphatic, araliphatic and/or aliphatic monocarboxylic acids
with
b) from 52 to 60 mol% of an alcohol component comprising
b1) one or more aliphatic, cycloaliphatic or araliphatic polyols having a number-average molecular weight of from 62 to 272 g/mol and a mean OH functionality ≥ 2 and
b2) optionally aliphatic, cycloaliphatic and/or araliphatic monoalcohols,
B) one or more lactone-based polyols having a mean OH functionality ≥ 2,
C) one or more polyisocyanates reactive towards OH groups and having an NCO functionality ≥ 2 and
D) optionally solvents, auxiliary substances and additives.

2. Binder compositions according to claim 1, **characterised in that** there are used in component a1) one or more compounds selected from the group consisting of phthalic anhydride, isophthalic acid, adipic acid, maleic anhydride, hexahydrophthalic anhydride and mixtures thereof.

3. Binder compositions according to claim 1 or 2, **characterised in that** there are used in component a2) one or more compounds selected from the group consisting of 2-ethylhexanoic acid, saturated and unsaturated monofunctional C₁₆-C₁₈-fatty acids, benzoic acid and cyclohexanecarboxylic acid and mixtures thereof.

4. Binder compositions according to any one of claims 1 to 3, **characterised in that** there are used in component b1) one or more compounds selected from the group consisting of neopentyl glycol, 1,6-hexanediol, cyclohexanedimethanol, 1,2-, 1,3- and 1,4-cyclohexanediol, 2,2-bis(4-hydroxycyclohexyl)-propane, octahydro-4,7-methano-1H-indenedimethanol, glycerol, trimethylolpropane, trimethylolethane, pentaerythritol, sorbitol and mixtures thereof.

5. Binder compositions according to any one of claims 1 to 4, **characterised in that** there are used in component b2) one or more compounds selected from the group consisting of 1-hexanol, 2-ethylhexanol, cyclohexanol and mixtures thereof.

6. Binder compositions according to any one of claims 1 to 5, **characterised in that** the polyols of component B) are based on ε-caprolactone.

7. Binder compositions according to claim 6, **characterised in that** the polyols of component B) based on ε-caprolactone have a mean OH functionality of ≥ 3, a number-average molecular weight of from 119 to 1500 g/mol and an OH content of from 9.0 to 36 wt.%.

8. Binder compositions according to any one of claims 1 to 7, **characterised in that** the polyisocyanates of component C) contain urethane, uretdione, allophanate, biuret, iminooxadiazinedione and/or isocyanurate groups and are based on aliphatic and/or cycloaliphatic diisocyanates.

9. Binder compositions according to claim 8, **characterised in that** the polyisocyanates of component C) are based on 1,6-diisocyanatohexane, 1-isocyanato-3,3,5-trimethyl-5-isocyanatomethylcyclohexane (isophorone diisocyanate), 4,4'-diisocyanatodicyclohexylmethane, 1,4-diisocyanatocyclohexane, 1-methyl-2,4-diisocyanatocyclohexane, 1-methyl-2,6-diisocyanatocyclohexane, 4-isocyanatomethyl-1,8-octane diisocyanate and/or mixtures thereof.

10. Use of the binder compositions according to any one of claims 1 to 9 in the coating of optionally previously primed plastics, metals, woods, wood substitutes, glasses, stone, ceramics or concrete.

11. Coatings obtainable from binder compositions according to any one of claims 1 to 9.

12. Substrates coated with coatings according to claim 11.

## Revendications

1. Compositions de liants, contenant
A) un ou plusieurs polyesters polyols avec un indice de saponification de 50 à 300 mg de KOH/g, pouvant être obtenus par réaction de
a) 48 à 40 % en mole d'un composant acide carboxylique contenant
a1) un ou plusieurs acides carboxyliques aliphatiques, cycloaliphatiques, araliphatiques ou aromatiques d'une fonctionnalité COOH ≥ 2 ou leurs anhydrides et
a2) le cas échéant des acides monocarboxyliques aromatiques, cycloaliphatiques, araliphatiques et/ou aliphatiques
avec
b) 52 à 60 % en mole d'un composant alcool, contenant
b1) un ou plusieurs polyols aliphatiques, cycloaliphatiques ou araliphatiques d'un poids moléculaire arithmétique moyen de 62 à 272 g/mol, d'une fonctionnalité OH moyenne ≥ 2, et
b2) le cas échéant des monoalcools aliphatiques, cycloaliphatiques et/ou araliphatiques,
B) un ou plusieurs polyols basés lactone avec une fonctionnalité OH moyenne ≥ 2,
C) un ou plusieurs polyisocyanates d'une fonctionnalité NCO ≥ 2, réactifs vis-à-vis de groupes OH, et
D) en option, des solvants, des substances auxiliaires et des additifs.

2. Compositions de liants selon la revendication 1, **caractérisées en ce que** dans le composant a1) sont utilisés un ou plusieurs composés, choisis parmi le groupe consistant en l'anhydride phtalique, l'acide isophtalique, l'acide adipique, l'anhydride maléique, l'anhydride hexahydrophtalique, ainsi que leurs mélanges.

3. Compositions de liants selon la revendication 1 ou 2, **caractérisées en ce que** dans le composant a2) sont utilisés un ou plusieurs composés, choisis parmi le groupe consistant en l'acide 2-éthyl-hexanoïque, des acides gras monofonctionnels saturés et insaturés en C₁₆ à C₁₈, l'acide benzoïque et l'acide cyclohexane carboxylique, ainsi que leurs mélanges.

4. Compositions de liants selon l'une quelconque des revendications 1 à 3, **caractérisées en ce que** dans le composant b1) sont utilisés un ou plusieurs composés, choisis parmi le groupe consistant en le néopentylglycol, l'hexane diol 1-6, le cyclohexane di méthanol, les cyclohexanes diols-1,2, -1,3 et -1,4, le 2,2-bis(4-hydroxycyclohexyl)-propane, l'octahydro-4,7-méthano-1H-indenodiméthanol, le glycérol, le triméthylolpropane, le triméthyloléthane, le pentaérythritol, le sorbitol ainsi que leurs mélanges.

5. Compositions de liants selon l'une quelconque des revendications 1 à 4, **caractérisées en ce que** dans le composant b2) sont utilisés un ou plusieurs composés, choisis parmi le groupe consistant en le 1-hexanol, le 2-éthylhexanol, le cyclohexanol ainsi que leurs mélanges.

6. Compositions de liants selon l'une quelconque des revendications 1 à 5, **caractérisées en ce que** les polyols du composant B) se basent sur la ε-caprolactone.

7. Compositions de liants selon la revendication 6, **caractérisées en ce que** les polyols du composant B) se basant sur la ε-caprolactone présentent une fonctionnalité OH moyenne ≥ 3, un poids moléculaire moyen arithmétique de 119 à 1.500 g/mol et une teneur en OH de 9,0 à 36 % en poids.

8. Compositions de liants selon l'une quelconque des revendications 1 à 7, **caractérisées en ce que** les polyisocyanates du composant C) comportent des groupes uréthane, uretdione, allophanate, biuret, iminooxadiazine dione et/ou isocyanurate et se basent sur des diisocyanates aliphatiques et/ou cycloaliphatiques.

9. Compositions de liants selon la revendication 8, **caractérisées en ce que** les polyisocyanates du composant C) se basent sur le 1,6-diisocyanatohexane, le 1-isocyanato-3,3,5-triméthyl-5-isocyanatométhylcyclohexane (isophorone diisocyanate), le 4,4'-diisocyanatodicyclohexylméthane, le 1,4-diisocyanatocyclohexane, le 1-méthyl-2,4-diisocyanatocyclohexane, le 1-méthyl-2,6-diisocyanatocyclohexane, le 4-isocyanatométhyl-1,8-octane diisocyanate et/ou sur leurs mélanges.

10. Utilisation des compositions de liants selon l'une quelconque des revendications 1 à 9 pour le revêtement de plastiques, de métaux, de bois, de succédanés de bois, de verres, de pierre, de céramique ou de béton, dotés précédemment le cas échéant d'une couche de fond.

11. Revêtements pouvant être obtenus à partir de compositions de liants selon l'une quelconque des revendications 1 à 9.

12. Substrats revêtus par des revêtements selon la revendication 11.
